(19) Europäisches Patentamt
European Patent Office
Office européen des brevets

(11) **EP 1 471 379 B1**

(12) **FASCICULE DE BREVET EUROPEEN**

(45) Date de publication et mention
de la délivrance du brevet:
**28.05.2008 Bulletin 2008/22**

(51) Int Cl.:
*G02F 1/355* (2006.01)    *G02F 1/365* (2006.01)

(21) Numéro de dépôt: **04291001.8**

(22) Date de dépôt: **14.04.2004**

(54) **Filtre optique reconfigurable**

Abstimmbares optisches Filter

Tunable optical filter

(84) Etats contractants désignés:
**AT BE BG CH CY CZ DE DK EE ES FI FR GB GR
HU IE IT LI LU MC NL PL PT RO SE SI SK TR**

(30) Priorité: **22.04.2003 FR 0304911**

(43) Date de publication de la demande:
**27.10.2004 Bulletin 2004/44**

(73) Titulaire: **Alcatel Lucent
75008 Paris (FR)**

(72) Inventeurs:
• **Riant, Isabelle
91400 Orsay (FR)**
• **Belouet, Christian
92330 Sceaux (FR)**

(74) Mandataire: **Chaffraix, Sylvain et al
Alcatel Lucent
Intellectual Property & Standards
54 rue La Boétie
75008 Paris (FR)**

(56) Documents cités:
WO-A-03/012500          WO-A-03/025626
GB-A- 2 241 348          US-A1- 2002 085 605
US-A1- 2003 016 907

• MELLONI A ET AL: "ALL-OPTICAL SWITCHING
IN PHASE-SHIFTED FIBER BRAGG GRATING"
IEEE PHOTONICS TECHNOLOGY LETTERS,
IEEE INC. NEW YORK, US, vol. 12, no. 1, janvier
2000 (2000-01), pages 42-44, XP000912613 ISSN:
1041-1135
• JEONG Y ET AL: "ALL-OPTICAL SIGNAL GATING
IN CASCADED LONG-PERIOD FIBER
GRATINGS" IEEE PHOTONICS TECHNOLOGY
LETTERS, IEEE INC. NEW YORK, US, vol. 12, no.
9, septembre 2000 (2000-09), pages 1216-1218,
XP000968646 ISSN: 1041-1135
• NANDAKUMAR P ET AL: "Quantum size effects
on the third order optical nonlinearity of CdS
quantum dots in Nafion" OPTICS
COMMUNICATIONS, NORTH-HOLLAND
PUBLISHING CO. AMSTERDAM, NL, vol. 185, no.
4-6, 15 novembre 2000 (2000-11-15), pages
457-465, XP004223709 ISSN: 0030-4018

**Description**

La présente invention concerne le domaine des filtres optiques disposés dans des guides d'onde optique.

Les filtres optiques, tels que les réseaux de Bragg photo-inscrits dans des guides optiques, trouvent des applications de plus en plus importantes dans les systèmes optiques, où ils sont utilisés pour des applications telles que la sélection de longueur d'onde, l'égalisation de gain ou la compensation de dispersion chromatique par exemple.

Un guide d'onde est classiquement composé d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur $n_1$ et de la gaine $n_2$ sont tels que $n_1 > n_2$. Ainsi, le coeur et la gaine forment un guide d'onde. Comme cela est bien connu, la propagation d'un signal optique dans un guide d'onde monomode se décompose en un mode fondamental guidé dans le coeur et en des modes secondaires guidés sur une certaine distance dans l'ensemble coeur-gaine optique, appelés également modes de gaine. La gaine est elle-même entourée d'un milieu extérieur d'indice de réfraction $n_3 >$ ou $< n_2$. L'ensemble coeur-gaine associé au milieu extérieur forme à nouveau un guide d'onde. Un guide d'onde peut être constitué par une fibre optique ou un guide planaire.

Le coeur et/ou la gaine du guide peuvent être dopés de manière à être rendus photosensibles pour une inscription de réseau de Bragg, par exemple avec du germanium (Ge). De manière classique, un réseau de Bragg est composé d'une perturbation périodique de l'indice de réfraction dans le guide qui forme un réseau d'indice. Cette perturbation d'indice est obtenue par une irradiation localisée du guide à travers un masque de phase qui détermine le pas $\Lambda$ du réseau. L'intensité et la modulation de l'irradiation lors de l'inscription définissent un réseau de Bragg caractérisé par la relation dite de Bragg, avec $\Lambda$ le pas du réseau et $n_{eff}$ l'indice effectif du mode fondamental guidé dans le coeur du guide optique :

$$\lambda_B = 2\,\Lambda.n_{eff}\ .$$

Cette relation caractérise un réseau de Bragg à pas courts. Un réseau à pas courts perpendiculaire à l'axe de la fibre constitue un filtre spectral réflecteur centré sur la longueur d'onde de Bragg $\lambda_B$. Ce filtre est classiquement utilisé pour des applications de filtrage, ou de multiplexage permettant l'ajout ou l'extraction d'une longueur d'onde de transmission. Le réseau ou les réseaux de Bragg sont alors associés à un ou plusieurs composants à plusieurs voies entrée-sortie, par exemple des circulateurs optiques ou des coupleurs.

Les réseaux de Bragg ont fait l'objet de nombreux développements. Ainsi, des réseaux, dit chirpés,

dont le pas $\Lambda$ varie le long du réseau sont classiquement utilisés pour des applications de compensation de la dispersion chromatique.

Par ailleurs, les réseaux en angle ou réseaux inclinés, connus sous le terme de SBG pour Slanted Bragg Grating en anglais, ou les réseaux à long pas, connus sous le terme de LPG pour Long Period Grating en anglais, sont classiquement utilisés pour des applications d'égalisation de gain. De tels réseaux sont conçus pour permettre un couplage du mode fondamental dans les modes de gaine permettant un filtrage sans réflexion aux longueurs d'onde de couplage et permettant de s'affranchir des isolateurs optiques.

US 2002/0085605 décrit une diode laser comporte un résonateur optique comprenant dans sa couche active un réseau de diffraction constitué par des "quantum dots"

Les filtres optiques sont intégrés dans des systèmes optiques et sont généralement associés à des amplificateurs optiques disposés dans des répéteurs optiques répartis régulièrement le long de lignes de transmission. Les amplificateurs optiques ne fournissent généralement pas une amplification égale pour toutes les longueurs d'onde des signaux transmis sur les différents canaux d'une même ligne de transmission. En particulier, avec le développement des applications de transmission par multiplexage en longueur d'onde (WDM, pour Wavelength Division Multiplexing) sur de larges bandes spectrales, les disparités d'amplification sur une bande passante donnée ont tendance à s'accentuer. Il est donc nécessaire d'associer aux amplificateurs en ligne des filtres égaliseurs de gain qui permettent de rétablir les disparités d'amplification des différents canaux de transmission d'un système optique.

En outre, en particulier pour ces réseaux WDM installés sur des liaisons longues distances et à haut débit, il est nécessaire de gérer la dispersion chromatique, l'objectif étant d'obtenir, pour toutes les valeurs de longueur d'onde du multiplex, une dispersion chromatique cumulée sensiblement nulle sur la liaison, de sorte à limiter l'élargissement des impulsions. Ainsi, des compensateurs de dispersion chromatique à réseau de Bragg peuvent-ils être insérés dans la ligne de transmission.

Or, un système optique est souvent évolutif et il n'est pas rare que les paramètres d'un composant optique, tel qu'un égaliseur de gain ou un compensateur de dispersion, ne soient plus du tout adaptés aux spécifications requises par les systèmes de transmission réels. Par exemple, une telle évolution peut être due à un vieillissement, à une variation de température, à des interventions localisées sur la ligne ou à des ajouts de modules optiques ou de canaux optiques de transmission après l'installation de la ligne. Les paramètres préalablement fixés des différents composants du système optique deviennent alors inadaptés.

En outre, pour les applications de routage optique, il y a un besoin de filtres spectraux que l'on puisse activer à une longueur d'onde donnée afin par exemple de commuter le signal à cette longueur d'onde. Cela peut par exemple être un filtre que l'on place à une longueur d'onde correspondant à un canal, le signal associé à cette longueur d'onde est alors extrait, ou que l'on place entre deux longueurs d'onde correspondants à deux canaux adjacents, et le signal est alors transmis sans aucune modification. Mais lorsque les canaux sont proches spectralement (<= 50 GHz), il devient difficile de placer le filtre entre deux canaux sans en modifier leurs transmissions. L'idéal serait donc de disposer d'un filtre que l'on active ou non en fonction du besoin.

Il est donc nécessaire de réaliser, entre autre, des filtres optiques qui permettent d'accorder dynamiquement leur réponse spectrale pour correspondre aux évolutions des conditions de fonctionnement des systèmes optiques dans lesquels ils sont disposés, ou des filtres « agiles » ou reconfigurables qui permettent d'être activés ou non pour des applications de routage optique

Il existe déjà de nombreux filtres optiques accordables par commande externe. En effet, une action localisée sur le guide ou son milieu extérieur peut modifier l'indice effectif du guide localement et de là même la réponse du filtre selon la relation de Bragg précédemment citée.

Les filtres accordables connus sont le plus souvent soumis à une contrainte thermique (avec un élément Peltier ou un élément chauffant) ou à une contrainte mécanique (tel qu'un activateur piézoélectrique ou autre). De telles contraintes permettent, selon les modes de réalisation, de décaler la longueur d'onde du filtre et/ou d'introduire ou modifier une variation du pas (chirp).

Ces filtres accordables connus nécessitent une commande externe, souvent massive. Ces solutions sont assez encombrantes et présentent généralement un temps de réponse élevé pour l'accord du filtre.

Par ailleurs, des recherches sont en cours pour induire des effets non linéaires dans un guide d'onde par une méthode dite de « poling » afin de pouvoir modifier ultérieurement l'indice de réfraction du guide d'onde dynamiquement. La méthode de « poling » consiste à créer, au sein du matériau dont l'indice de réfraction doit être modifié, une direction et un sens privilégié qui augmentent la susceptibilité non-linéaire d'ordre 2.

Une première méthode consiste à appliquer un champ électrique élevé sur une zone du guide qui est simultanément insolée par irradiation aux ultraviolets. Cette méthode, dite de « poling » optique, est décrite en particulier dans la publication de S. Matsumoto et al, « Crystallization and optical nonlinearity in GeO2-SiO2 glass poled with ArF excimer-laser irradiation », Journal of Applied Physics, Vol. 88, N. 12, p. 6993 (2000) .

Une autre méthode connue de « poling » consiste à appliquer le champ électrique sur une zone de guide qui est simultanément soumise à une température très élevée. Cette méthode, dite de « poling » thermique est décrite en particulier dans la publication de A.C. Liu et al. « Improved nonlinear coefficient (0.7 pm/V) in silica thermally poled at high voltage and temperature », Electronics Letters, Vol. 36, N. 6, p. 555 (2000).

Sur la portion de guide ayant subi le « poling », le matériau présente une dissymétrie qui induit des effets non linéaires liés à l'augmentation de la susceptibilité non-linéaire d'ordre 2, $\chi^2$. Cette dissymétrie permet en particulier de modifier localement l'indice du guide d'onde le profil d'indice en appliquant ultérieurement sur la zone « polée » un champ électrique externe et de créer ainsi un profil d'indice reconfigurable.

Néanmoins, cette solution pour réaliser des filtres optiques accordables présente des problèmes techniques de mise en oeuvre. En particulier, le champ électrique de commande externe appliqué à la zone « polée » nécessite la mise en place d'électrodes à l'intérieur du guide, ce qui crée une biréfringence dans le cas d'une fibre optique.

D'autre part, bien que le « poling » thermique présente une évolution maîtrisée dans le temps, l'effet induit est encore de valeur faible pour être utilisé dans les systèmes optiques. Quant au « poling » optique, l'effet induit est très instable et donc encore très loin de pouvoir être utilisé. En outre, une augmentation périodique du $\chi^2$ permettant la création ou la modification d'une variation d'indice non linéaire périodique avec une période correspondant à un filtrage aux longueurs d'onde des télécommunications (~530 nm pour une longueur d'onde vers 1.5 $\mu$m) ne peut être obtenue qu'avec le « poling » optique. En effet, seule l'irradiation laser permet d'obtenir une telle résolution, et non l'application d'une forte température.

L'objet de la présente invention est donc de répondre aux inconvénients de l'art antérieur et de proposer un filtre optique accordable qui s'affranchisse des commandes externes non optiques pour l'accordabilité.

A cet effet, l'invention propose d'utiliser une commande optique basée sur l'effet Kerr qui est lié à la susceptibilité d'ordre 3 du matériau constituant le guide optique. Le guide est donc préparé par incorporation de nanoparticules de semiconducteur adaptées pour présenter une susceptibilité d'ordre 3 donnée à une fréquence donnée, puis une commande optique est appliquée par couplage longitudinal dans le guide afin d'entraîner une variation d'indice proportionnelle à ladite susceptibilité d'ordre 3 par effet Kerr.

Plus particulièrement, la présente invention concerne le système optique défini dans la revendication 1

La variation d'indice de réfraction dans le guide est totalement induite par l'effet non linéaire.

Selon un mode de mise en oeuvre, la commande optique a une longueur d'onde distincte de la longueur d'onde du signal optique incident dans le guide et une puissance supérieure à la celle du signal optique incident dans le guide.

Selon les applications, les nanoparticules de semiconducteurs contenues dans le guide d'onde sont composés de Si-Ge ou de matériaux II-VI ou III-V ou d'éléments de tellures.

L'invention concerne également un procédé de réalisation d'un filtre optique accordable selon la revendication 6.

Les nanoparticules présentent une susceptibilité diélectrique ($\chi$3) élevée et sont réparties périodiquement sur la portion de guide.

L'invention peut s'appliquer à un système optique comportant une liaison optique, la commande optique étant couplée au guide d'onde depuis ladite liaison optique.

Les particularités et avantages de la présente invention apparaîtront plus clairement à la lecture de la description qui suit, donnée à titre d'exemple illustratif et non limitatif.

La présente invention consiste à commander optiquement un réseau d'indice pour accorder au moins un paramètre de ce réseau afin de modifier la réponse spectrale du filtre optique constitué par ce réseau.

On rappelle que les paramètres de la réponse spectrale d'un filtre optique sont la longueur d'onde et le contraste. Dans le cas d'un filtre à réseau d'indice, ces paramètres sont liés pour le premier à l'indice effectif $n_{eff}$ du guide et au pas $\Lambda$ du réseau ; et pour le second à la modulation d'indice $\Delta n_{mod}$ du réseau. L'indice effectif $n_{eff}$ du guide est lié à l'indice de réfraction n du matériau du guide et à la variation d'indice de réfraction moyenne $\Delta n_{moy}$ induite le long de la portion de guide comportant le réseau, et la modulation d'indice $\Delta n_{mod}$ est liée aux variations d'indice autour de la valeur de la variation d'indice de réfraction moyenne $\Delta n_{moy}$.

Ainsi, la modification de l'un ou l'autre de ces paramètres du réseau ($\Delta n_{moy}$, $\Delta n_{mod}$, $\Lambda$) entraîne une modification de la réponse spectrale du filtre, soit par un décalage de la longueur d'onde, soit par une modification du contraste.

Selon l'invention, le filtre est constitué par un réseau d'indice réalisé dans un guide d'onde comportant des nanoparticules de semiconducteur qui induisent dans le coeur et/ou la gaine du guide une susceptibilité diélectrique d'ordre 3, $\chi^3$.

Les nanoparticules de semiconducteur présentent un $\chi^3$ de valeur importante lorsque leur taille $R_{NP}$ est beaucoup plus petite que le rayon de l'exciton du Bohr $R_{Bohr}$. Il a été établi que $\chi^3$ augmente proportionnellement à $[R_{Bohr}/R_{NP}]^6$ et peut atteindre une valeur 3 à 4 fois plus élevée que celle d'un semiconducteur massif. Ces résultats ont été publiés par S. Lettieri et al, « Nonresonant Kerr effect in microporous silicon : Nonbulk dispersive behavior of below band gap $\chi3(\tilde{\omega})$ », Journal of applied Physics, Vol. 91, N. 9, p. 5564 (2002) .

Ainsi, en ajustant de manière adéquate la taille des nanoparticules de semiconducteur incorporées dans le coeur et/ou la gaine du guide, ainsi que la fraction de volume du guide occupé par ces nanoparticules (le taux de remplissage), il est possible créer dans une portion du guide optique une susceptibilité d'ordre trois $\chi^3$ qui introduit un effet non-linéaire.

La taille des nanoparticules va déterminer en particulier la fréquence de la commande optique $I(w_0)$. Ces nanoparticules seront effectivement excitées par un signal lumineux de forte intensité pour une fréquence $w_o$ donnée. La dissymétrie introduite par $\chi^3$ dans le guide provoque une variation de l'indice de réfraction par Effet Kerr sous l'action de la commande $I(w_0)$. Il a été simulé qu'une commande optique d'environ 100mW peut induire une variation d'indice $\Delta n$ de l'ordre de $10^{-4}$ dans une zone du guide présentant un $\chi^3$ élevé.

Le filtre du système optique selon l'invention est constitue par un réseau d'indice réalisé dans un guide comportant des nanoparticules de semiconducteur. Selon l'invention, au moins un paramètre du réseau d'indice est accordé par une modification des propriétés diélectriques du guide, en particulier par une excitation de $\chi^3$ au moyen d'une commande optique $I(w_0)$ couplée longitudinalement dans le guide.

La disposition des nanoparticules le long du guide optique définit des zones périodiques de non-linéarité.

Selon un mode non couvert par l'invention, un réseau d'indice peut être photo-inscrit dans une zone photosensible du guide, de manière classique, introduisant un $\Delta n_{mod}$ et/ou un $\Delta n_{moy}$. Des nanoparticules de semiconducteur sont réparties de manière continue dans cette zone du guide. Une commande optique adaptée aux dites nanoparticules $I(w_0)$ induit un effet non linéaire lié à la susceptibilité diélectrique d'ordre trois, $\chi^3$ des nanoparticules qui entraîne une modification de $\Delta n_{moy}$ et/ou $\Delta n_{mod}$ par effet Kerr, modifiant ainsi la longueur d'onde et/ou le contraste du filtre.

Selon un mode de réalisation de l'invention, des nonoparticules sont réparties de manière périodique sur une zone du guide et la commande optique adaptée aux dites nanoparticules $I(w_0)$ induit un effet non linéaire lié à la susceptibilité diélectrique d'ordre 3 ($\chi^3$) des nanoparticules qui modifie ou génère un $\Delta n_{mod}$ et/ou un $\Delta n_{moy}$ par effet Kerr, modifiant ou créant ainsi un filtre à réseau d'indice. Selon ce mode de réalisation, dans le cas où la modulation d'indice est créée, le réseau d'indice est dans un état latent tant que la commande optique n'est pas appliquée, c'est à dire que l'on peut introduire un filtre optique sur commande, par exemple pour ajouter ou enlever un canal dans un signal multiplexé.

La commande optique est couplée dans le guide optique de manière connue et similaire au couplage d'un signal de pompe dans un amplificateur à fibre dopée. La commande optique est émise à une longueur d'onde correspondante à la fréquence d'excitation ($w_0$) des nanoparticules de semiconducteur, cette longueur d'onde $\lambda(w_0)$ étant distincte de celle du signal incident et avec une puissance $P_{i(wo)}$ fortement supérieure à la puissance du signal optique incident. Ainsi, les propriétés diélectriques du guide ne sont pas modifiées par le signal optique de transmission mois seulement par le signal de commande dont la puissance excite les nanoparticules de semiconducteur et provoque une augmentation de $\chi^3$.

Le filtre doit donc de préférence être disposé éloigné de la sortie des amplificateurs optiques et ne doit pas être disposé dans des systèmes optiques transmettant des signaux de forte puissance, la puissance du signal de commande étant généralement de quelques centaines de mW.

Les nanoparticules de semiconducteur sont choisies de manière à présenter une susceptibilité d'ordre trois $\chi^3$ élevée et peuvent être composées de Si-Ge, de matériaux II-VI ou III-V ou d'éléments de tellure par exemple. Les nanoparticules peuvent être incorporées directement dans la matrice (en silice) du guide, avec un rayon $R_{NP}$ largement inférieur à $R_{Bohr}$, à partir de techniques classiques, telles que dépôt chimique en phase vapeur (CVD) ou sol-gel. Pour certaines compositions de semiconducteurs, les nanoparticules peuvent être fabriquées par traitement thermique ou irradiation laser du guide qui a été préalablement dopé avec les matériaux correspondants. La taille des nanoparticules, qui détermine la fréquence de la commande optique d'activation de $\chi^3$ peut être adaptée par irradiation laser

Les nanoparticules sont disposées dans le guide de manière périodique. Une distribution périodique peut être obtenue par un procédé de nucléation ou par une destruction d'une distribution homogène en grossissant certaines nanoparticules jusqu'à une taille supérieure à $R_{Bohr}$, ce qui les rend inactive à la commande d'activation.

On a ainsi fabriqué un filtre optique accordable constitué d'un réseau d'indice reconfigurable sur commande optique. Le temps de réponse d'accord du filtre est considérablement réduit, de l'ordre de quelques picosecondes. La commande optique est couplée dans le guide longitudinalement, ce qui permet de s'affranchir des commandes électriques, thermiques ou mécaniques de l'art antérieur. Le filtre est en outre totalement intégré au guide, ce qui limite les pertes d'insertion, et indépendant de la polarisation lorsque réalisé dans une fibre optique.

**Revendications**

1. Système optique comportant: où moins un filtre optique accordable comprenant un réseau d'indice réalisé dans un guide d'onde, contenant des nonoparticules de semiconducteur, définissant une direction longitudinale de propagation d'un signa! optique incident, **caractérisé en ce qu'**il comporte en outre un moyen d'application d'une commande optique coupe dons le guide et **en ce que** le réseau d'indice est constitué par une variation d'indice de réfraction induite par un effet Kerr, lié à la susceptibilité diélectrique d'ordre 3 $\chi^3$ desdites particules, obtenu par obtenu par application de ladite commande optique se propageant longitudinalement dans ledit guide.

2. Système optique selon la revendication 1, dans lequel la commande optique a une longueur d'ondé distincte de la longueur d'onde du signal optique incident dans le guide.

3. Système optique selon l'une des revendications 1 et 2, dans lequel la commande optique a une puissance supérieure à celle du signal optique incident dans le guide.

4. Système optique selon l'une des revendications précédentes, dans lequel les nanoparticules de semiconducteur contenues dans le guide d'onde sont composés de Si-Ge ou de matériaux II-VI ou III-V ou d'éléments de tellures.

5. Système optique selon l'une des revendications précédentes, comportant en outre une liaison optique, la commande optique étant couplée au guide depuis ladite liaison optique.

6. Procédé de réalisation d'un filtre optique accordable constitué par un réseau d'indice disposé dons un guide d'onde, comportant les étapes suivantes :

- insertion de nanoparticules de semiconducteur réparties périodiquement sur une portion du guide d'onde,
- ajustement de la taille des nanoparticules par irradiation laser ainsi que de leur forme de manière à obtenir une susceptibilité diélectrique d'ordre 3$\chi^3$ élevée sur une portion du guide afin de réaliser un réseau d'indice dans un état latent,
- activation du réseau d'indice par application d'une commande optique de fréquence $w_o$ adapté, couplée dans ledit guide et se propageant longitudinalement dans ledit guide, pour obtenir un filtre à réseau d'indice.

**Claims**

1. An optical system comprising at least one tunable optical filter comprising an index grating produced in a waveguide, containing semiconductor nanoparticles, defining a longitudinal direction of propagation of an incident optical signal, which filter is **characterized in that** it further comprises means for applying an optical control signal coupled into the waveguide and **in that** the index grating consists of a refractive index variation induced by a Kerr effect linked to the 3rd order dielectric susceptibility $\chi^3$ of said particles, obtained by applying said optical control signal longitudinally in said waveguide.

2. An optical system according to claim 1, in which the optical control signal has a wavelength different from the wavelength of the incident optical signal in the waveguide.

3. An optical system according to claim 1 and claim 2, in which the optical control signal has a power greater than that of the incident optical signal in the waveguide.

4. An optical system according to any preceding claim, in which the semiconductor nanoparticles contained in the waveguide are made up of Si-Ge or II-VI or III-V materials or elements of tellurium.

5. An optical system according to any preceding claim, further comprising an optical connection, the optical control signal being coupled into the waveguide from said optical connection.

6. A method of producing a tunable optical filter consisting of an index grating disposed in an optical waveguide, the method comprising the following steps:

   - inserting semiconductor nanoparticles distributed periodically over a portion of the waveguide;
   - adjusting the size of the nanoparticles by laser irradiation as well as their shape to obtain a high $3^{rd}$ order dielectric susceptibility $\chi^3$ over a portion of the waveguide in order to produce an index grating in a latent state; and
   - activating the index grating by applying an optical control signal of tuned frequency $w_o$, coupled in said waveguide and propagating longitudinally in said .waveguide, to obtain an index grating filter.

**Patentansprüche**

1. Optisches System mit mindestens einem optischen Filter, umfassend ein Indexgitter, das in einem Halbleiterpartikel enthaltenden Wellenleiter ausgeführt ist, welcher eine längsgerichtete Ausbreitungsrichtung eines auftreffenden optischen Signals definiert, **dadurch gekennzeichnet, dass** es außerdem ein Mittel zur Anwendung einer optischen Steuerung umfasst, die in den Leiter eingekoppelt wird, und **dadurch**, dass das Indexgitter von einer durch einen Kerr-Effekt hervorgerufenen Änderung des Brechungsindex gebildet wird, die mit der dielektrischen Suszepibilität 3. Ordnung $\chi_3$ der Partikel verbunden ist und die durch Anwendung der optischen Steuerung erzielt wird, die sich in Längsrichtung in dem Leiter ausbreitet.

2. Optisches System nach Anspruch 1, in dem die optische Steuerung eine Wellenlänge aufweist, die sich von der Wellenlänge des in dem Leiter auftreffenden optischen Signals unterescheidet.

3. Optisches System nach einem der Ansprüche 1 und 2, in dem die optische Steuerung eine höhere Leistung aufweist als jene des in dem Leiter auftreffenden optischen Signals.

4. Optisches System nach einem der vorhergehenden Ansprüche, in dem die in dem Wellenleiter enthaltenen Nanopartikel aus Si-Ge oder Werkstoffen II-VI oder III-V oder aus Teilurelementen bestehen.

5. Optisches System nach einem der vorhergehenden Ansprüche, außerdem umfassend eine optische Verbindung, wobei die optische Steuerung von dieser optischen Verbindung aus in den Leiter eingekoppelt wird,

6. Verfahren zur Ausführung eines abstimmbaren optischen Filters, welcher aus einem in einem Wellenleiter angeordneten Indexgitter besteht, umfassend die folgenden Schritten

   - Einfügen von Halbeiter-Nanopartiketn, die periodisch über einen Abschnitt des Wellenleiters verteilt sind;
   - Anpassen der Größe der Nanopartikel durch Laserbestrahlung sowie ihrer Form in der Weise, dass eine hohe dielektrische Suszeptibilität 3- Ordnung $\chi_3$ auf einem Abschnitt des Leiters erzielt wird, um ein Indexgitter in einem latenten Zustand herzustellen;
   - Aktivieren des Indexgitters durch Anwenden einer Steuerung einer geeigneten Frequenz $w_0$, die in den Leiter eingekoppelt wird und sich in Längsrichtung in dem Leiter um ein Filter mit Indexgitter zu erhalten.

## RÉFÉRENCES CITÉES DANS LA DESCRIPTION

**Documents brevets cités dans la description**

- US 20020085605 A

**Littérature non-brevet citée dans la description**

- **S. MATSUMOTO et al.** Crystallization and optical nonlinearity in GeO2-SiO2 glass poled with ArF excimer-laser irradiation. *Journal of Applied Physics,* 2000, vol. 88 (12), 6993
- **A.C. LIU et al.** Improved nonlinear coefficient (0.7 pm/V) in silica thermally poled at high voltage and temperature. *Electronics Letters,* 2000, vol. 36 (6), 555
- **S. LETTIERI et al.** Nonresonant Kerr effect in microporous silicon : Nonbulk dispersive behavior of below band gap $\chi 3(\tilde{\omega}$. *Journal of applied Physics,* 2002, vol. 91 (9), 5564